# FASCICULE DE BREVET EUROPEEN

(11) **EP 1 917 225 B1**
(45) Date de publication et mention de la délivrance du brevet: **17.12.2008**
(21) Numéro de dépôt: 06794484.3
(22) Date de dépôt: 19.07.2006
(51) Int. Cl.: C04B 38/00, F01N 3/022, B01J 27/224, C04B 35/01, C04B 35/565

(54) **SUPPORT ET FILTRE CATALYTIQUE A BASE DE CARBURE DE SILICIUM ET A HAUTE SURFACE SPECIFIQUE**
KATALYTISCHER SILIZIUMCARBIDFILTER MIT HOCHSPEZIFISCHER OBERFLÄCHE UND TRÄGER
HIGH SPECIFIC SURFACE SILICON CARBIDE CATALYTIC FILTER AND SUPPORT

(30) Priorité: 28.07.2005 FR 0552357
(43) Date de publication de la demande: 07.05.2008
(73) Titulaire: Saint-Gobain Centre de Recherches et d'Etudes Européen, 92400 Courbevoie (FR)
(72) Inventeur: BARDON, Sébastien, 75020 Paris (FR); BRIOT, Anthony, 84000 Avignon (FR); BARATAUD-DIEN, Carine, 13410 Lambesc (FR); ANDY, Patricia, 84300 Les Taillades (FR)
(74) Mandataire: Jamet, Vincent
(86) Numéro de dépôt international: PCT/FR2006/050730
(87) Numéro de publication internationale: WO 2007/012776

(56) Documents cités:
- EP-A- 0 761 279
- EP-A- 1 070 687
- EP-A- 1 493 722
- EP-A- 1 552 882
- US-A1- 2002 011 683
- US-A1- 2005 159 292

## Description

L'invention se rapporte au domaine des structures catalytiques, notamment utilisées dans une ligne d'échappement d'un moteur à combustion interne du type diesel. De préférence, l'invention se rapporte à des filtres catalytiques permettant l'élimination conjointe des gaz polluants et des suies produites par la combustion d'un carburant diesel dans un moteur diesel.

Les filtres catalytiques permettant le traitement des gaz et l'élimination des suies issues d'un moteur diesel sont bien connus de l'art antérieur. Ces structures présentent toutes le plus souvent une structure en nid d'abeille, une des faces de la structure permettant l'admission des gaz d'échappement à traiter et l'autre face l'évacuation des gaz d'échappement traités. La structure comporte, entre les faces d'admission et d'évacuation, un ensemble de conduits ou canaux adjacents d'axes parallèles entre eux séparés par des parois poreuses. Les conduits sont obturés à l'une ou l'autre de leurs extrémités pour délimiter des chambres d'entrée s'ouvrant suivant la face d'admission et des chambres de sortie s'ouvrant suivant la face d'évacuation. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant.

De façon connue, durant son utilisation, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration.

Le plus souvent, les filtres sont en matière céramique poreuse, par exemple en carbure de silicium.

Des exemples de filtres catalytiques sont par exemple décrits dans les demandes de brevets EP 816 065, EP 1 142 619, EP 1 455 923 ou encore WO 2004/090294 et WO 2004/065088.

En plus du problème de traitement des suies, la transformation des émissions polluantes en phase gazeuse (c'est à dire principalement les oxydes d'azote (NOₓ) ou de soufre (SOₓ) et le monoxyde de carbone (CO), voire les hydrocarbures imbrûlés) en des gaz moins nocifs (tels que l'azote gazeux (N₂) ou le dioxyde de carbone (CO₂)) nécessite un traitement catalytique supplémentaire.

Pour traiter au cours d'une même étape les polluants gazeux et solides, on a cherché à ajouter une fonction catalytique sur le filtre à particules précédemment décrit. Selon les procédés classiquement utilisés, la structure en nid d'abeille est imprégnée par une solution comprenant le catalyseur ou un précurseur du catalyseur.

De tels procédés comportent en général au moins une étape d'imprégnation par immersion soit dans une solution contenant un précurseur du catalyseur ou le catalyseur solubilisé dans l'eau (ou un autre solvant polaire), soit une suspension dans l'eau de particules catalytiques. Un exemple d'un tel procédé est décrit par le brevet US 5,866,210.

De façon connue, le procédé d'imprégnation peut être conduit en une ou plusieurs étapes. La ou les étapes d'imprégnation visent à déposer de la manière la plus uniforme possible le catalyseur dans la structure.

Le plus souvent le catalyseur comprend un principe actif incluant des métaux précieux (Pt, Pd, Rh) et éventuellement un oxyde de terre rare, par exemple un mélange de platine et d'oxyde de cérium Pt/CeO₂. Le principe actif est habituellement déposé, selon des techniques bien connues en catalyse hétérogène, dans la porosité d'un support oxyde à forte surface spécifique, par exemple l'alumine, l'oxyde de titane, la silice, la cerine, l'oxyde de zirconium.

Il est connu par ailleurs que l'introduction d'un filtre à particules tel que précédemment décrit dans la ligne d'échappement du moteur entraîne une perte de charge susceptible d'altérer les performances de celui-ci. La porosité du filtre est en conséquence choisie suffisamment élevée pour éviter une telle altération et est comprise en général entre 20 et 75 %.

La perte de charge est d'autant plus importante que le filtre comprend une fonction catalytique. En effet, le dépôt du revêtement catalytique, en particulier du support du catalyseur tel que précédemment décrit, sur les parois et/ou dans la porosité de la structure tend à augmenter encore la perte de charge due à la présence du filtre dans la ligne d'échappement. Du fait de cette limitation, les quantités de catalyseur déposées et par suite l'efficacité du traitement catalytique des gaz d'échappement sont à l'heure actuelle limitées.

Il résulte de ce qui précède qu'un besoin existe d'obtenir une structure filtrante dont la microstructure (porosité, taille et répartition des pores) puisse permettre le dépôt d'une quantité accrue de catalyseur de façon à augmenter l'efficacité du traitement des gaz, mais sans pour autant conduire à une forte augmentation des pertes de charge.

Une solution possible consisterait à augmenter la porosité du réseau de grains de carbure de silicium, par exemple par la présence dans le mélange initial d'une grande quantité d'un agent porogène, du type résine synthétique tel que de la résine acrylique ou polymère organique tel que l'amidon. Cependant l'augmentation de la porosité conduit en parallèle à une diminution sévère des propriétés mécaniques du filtre, ce qui en diminue la tenue en service.

Le but de la présente invention est ainsi de fournir une structure en nid d'abeille d'un type nouveau, permettant de répondre aux problèmes précédemment exposés.

Dans une forme générale, la présente invention se rapporte à une structure en nid d'abeille comprenant un mélange de grains de carbure de silicium et d'alumine,
a) de porosité sensiblement égale ou peu différente de celle des structures en carbure de silicium actuellement utilisées comme simple filtre, c'est-à-dire non catalysées et
b) de haute surface spécifique.

Par haute surface spécifique, il est entendu au sens de la présente description une surface spécifique supérieure à 0,5 m²/ gramme. A titre d'information, les essais effectués par la demanderesse ont montré que la surface spécifique des filtres actuellement utilisés en carbure de SiC ne dépassait pas 0,2 m²/g. Une telle augmentation de la surface spécifique permet de diminuer sensiblement la quantité du support devant être déposée dans la structure pour en augmenter sa surface spécifique, voire de rendre inutile sa présence pour les valeurs les plus élevées des surfaces spécifiques obtenues selon l'invention, seul le principe actif étant alors déposé selon ce mode.

On connaît, de par le brevet européen EP 1 070 687 B1, des structures monolithiques en nid d'abeille, utilisables comme filtre à particules pour les gaz d'échappement des moteurs diesel et comprenant de 70 à 97 % en masse de carbure de silicium et de 3 à 30 % d'une phase liante oxyde, par exemple l'alumine Al₂O₃. Le but de cette invention est de fournir un procédé d'obtention de tels monolithes à des températures de cuisson réduites, n'excédant pas 1650°C. Cependant, en raison des températures élevées décrites dans ce procédé et d'une répartition des pores du type monomodale et centrée entre de 5 à 60 microns, les surfaces spécifiques obtenues sont inférieures à 0,5 m²/g. En particulier, le brevet EP 1 070 687 B1 ne mentionne pas l'utilisation possible de la structure comme support ou filtre catalytique.

Plus particulièrement, selon une première réalisation, la présente invention se rapporte à une structure du type en nid d'abeilles, faite d'un matériau céramique poreux, ladite structure étant caractérisée en ce que le matériau céramique poreux qui la constitue comprend :
- de 50 à 95 % en masse de carbure de silicium SiC,
- de 5 à 50 % en masse d'au moins une phase céramique oxyde,
ladite structure se caractérisant en outre par une porosité supérieure à 10%, par une surface spécifique supérieure à 0,5 m²/g, de préférence supérieure à 1 m²/g, et de manière très préférée supérieure à 1,5 m²/g et par une distribution des tailles de pore du type au moins bimodale.

La phase céramique oxyde est par exemple obtenue à partir d'un ou plusieurs précurseurs de ladite phase oxyde, dont la surface spécifique initiale est supérieure à 2 m²/gramme, de préférence supérieure à 5 m²/g, voire supérieure à 10 m²/g_{.}

De préférence, au moins 5% de la masse des précurseurs est constitué par une poudre se présentant sous une forme nanométrique. De préférence on utilise des quantités massiques comprises entre 5 et 50% de poudre nanométrique, par exemple entre 10 et 40% poids. Les essais menés par la demanderesse ont montré que la présence de cette poudre nanométrique permettait avantageusement d'obtenir une distribution de pores au moins bimodale dans la structure finale, après cuisson.

Des exemples de phases oxydes sont les oxydes d'aluminium, de terres rares, notamment de cérium ou de lanthane, de zirconium, de titane, de silicium et les silico-aluminates.

De préférence, la structure en nid d'abeille comprend :
- de 50 à 95 % en masse de carbure de silicium SiC,
- de 5 à 50 % en masse d'au moins une phase céramique oxyde simple ou mixte obtenue à partir d'au moins une alumine et/ou d'au moins un aluminate dont la surface spécifique initiale est supérieure à 2 m²/gramme, de préférence supérieure à 5 m²/g, voire supérieure à 10m²/g.

Avantageusement, le matériau céramique constitutif présente une porosité globale comprise entre environ 20 et environ 65%, de préférence entre 30 et 60%.

La distribution des tailles de pore dans la structure selon l'invention est du type au moins bimodale. Par exemple, une partie des pores présente une taille centrée sur un diamètre moyen compris entre 5 et 60 micromètres, de préférence entre 5 et 20 microns et l'autre partie des pores présente une taille centrée sur un diamètre moyen de l'ordre de 1,5 à 1 micron ou inférieur à 1,5 voire 1 micron et de préférence compris entre 1,5 et 0,0015 micron.

La présente invention se rapporte en particulier à une structure incorporant une partie centrale comprenant un élément filtrant en nid d'abeille ou une pluralité d'éléments filtrants en nid d'abeille reliés entre eux par un ciment de joint, le ou lesdits éléments comprenant un ensemble de conduits ou canaux adjacents d'axes parallèles entre eux séparés par des parois poreuses, lesquels conduits étant obturés par des bouchons à l'une ou l'autre de leurs extrémités pour délimiter des chambres d'entrée s'ouvrant suivant une face d'admission des gaz et des chambres de sortie s'ouvrant suivant une face d'évacuation des gaz, de telle façon que le gaz traverse les parois poreuses.

Par exemple, une telle structure filtrante comprend un nombre de canaux de 7,75 à 62 par cm², lesdits canaux ayant une section de 0,5 à 9 mm², les parois séparant les canaux ayant une épaisseur d'environ 0,2 à 1,0 mm, de préférence de 0,2 à 0,5 mm.

Selon une possibilité, la proportion massique de la ou des phases céramiques oxyde dans la structure est supérieure à 10%, de préférence supérieure à 20% ou même à 30%.

La présente invention se rapporte également au procédé de fabrication d'une structure telle que précédemment décrite dans lequel ladite structure est obtenue à partir d'un mélange initial de grains de carbure de silicium et d'un oxyde simple ou mixte ou d'un mélange d'oxydes dont la surface spécifique est supérieure à 2 m²/g, de préférence supérieure à 5 m²/g, voire supérieure à 10 m²/g. Ces oxydes peuvent par exemple être introduits dans le mélange initial sous forme de poudres comportant au moins une fraction nanométrique agglomérée naturellement, par exemple comme dans le cas de la boehmite ou agglomérée par voie de synthèse chimique, faisant intervenir par exemple des liaisons de Van der Vaals.

Par exemple, lesdits oxydes peuvent comprendre une alumine ou un aluminate ou un mélange d'alumine et/ou d'aluminate à forte surface spécifique.

En général, les grains de carbures de silicium présentent un diamètre d₅₀ inférieur à 125 microns, typiquement compris entre 5 à 125 microns.

Selon un mode de réalisation, ledit procédé comprend une étape de malaxage du mélange initial résultant en un produit homogène sous la forme d'une pâte liée, une étape d'extrusion dudit produit à travers une filière appropriée de manière à former des monolithes de forme nid d'abeilles, une étape de séchage des monolithes obtenus par exemple par chauffage et/ou par micro-ondes et une étape de cuisson.

L'étape de cuisson peut par exemple être réalisée :
- sous atmosphère d'un gaz neutre tel que l'argon, à une température ne dépassant pas 1700°C, de préférence ne dépassant pas 1600°C et de préférence comprise entre 1300 et 1600°C ou
- sous une atmosphère contenant de l'oxygène telle que l'air, à une température ne dépassant pas 1400°C, de préférence ne dépassant pas 1350°C et de préférence comprise entre 1200 et 1350°C

Selon une réalisation possible du procédé, au cours de la première étape, on malaxe un mélange comprenant au moins du carbure de silicium ayant au moins un type de granulométrie, une ou plusieurs phases oxyde à haute surface spécifique, telle qu'une alumine et/ou un aluminate et éventuellement un agent porogène, puis on ajoute au moins un plastifiant organique et/ou un liant organique et de l'eau.

Dans un mode possible de réalisation du procédé, le carbure de silicium est introduit dans le mélange sous la forme d'une poudre présentant au moins deux types de granulométrie, par exemple un mélange granulaire comprenant une fraction des grains dont la taille est inférieure à 10 microns et une fraction des grains dont la taille est supérieure à 10 microns. Un tel procédé peut permettre avantageusement un meilleur contrôle de la taille des pores de la structure finalement obtenue.

Selon un mode possible de réalisation du présent procédé, dans le but de contrôler la porosité recherchée pour le matériau constituant la structure monolithe de l'invention, on utilise un ensemble de grains de carbures de silicium dont le diamètre. d₅₀ comprise entre 5 et 125 microns et on effectue un ajout d'une proportion d'environ 0 à 30%, par exemple de 5 à 20% en masse d'un agent porogène choisi en fonction de la taille des pores recherchée.

Par exemple, dans l'étape de séchage, les monolithes céramiques crus obtenus sont séchés à une température allant de la température ambiante jusqu'à 110°C ou par micro-ondes pendant un temps suffisant pour amener la teneur en eau non liée chimiquement à moins de 1 % en masse.

Dans le cas de la fabrication d'un filtre à particule, le procédé comprend en outre une étape de bouchage d'un canal sur deux à chaque extrémité du monolithe, selon des techniques bien connues.

Lors de l'étape de cuisson, la structure monolithe est en général portée à une température comprise entre environ 750°C et 1400°C, de préférence entre 1200 et 1350°C, sous une atmosphère contenant de l'oxygène ou à une température comprise entre environ 750°C et 1700°C, de préférence entre 1300 et 1600°C, sous une atmosphère neutre.

L'invention se rapporte en outre à un filtre ou support catalytique, obtenu à partir d'une structure telle que précédemment décrite et après dépôt, de préférence par imprégnation, d'au moins une phase catalytique active supportée ou de préférence non supportée, comprenant typiquement un métal précieux tel que Pt, Pd, Rh et éventuellement un oxyde tel que CeO₂, ZrO₂, CeO₂-ZrO₂.

Une telle structure trouve notamment son application comme support catalytique dans une ligne d'échappement d'un moteur diesel ou essence ou comme filtre à particules dans une ligne d'échappement d'un moteur diesel.

L'invention et ses avantages seront mieux compris à la lecture des exemples non limitatifs qui suivent. Dans les exemples, tous les pourcentages sont donnés en poids.

### Exemple 1 :

Dans un malaxeur, on mélange
- 3000g de SiC de diamètre médian de grains d₅₀ d'environ 40 microns. Au sens de la présente description, le diamètre d₅₀ désigne le diamètre des particules au dessous duquel se trouve 50% en masse de la population,
- 1300g d'une poudre d'alumine sous la forme d'une alumine .γ de surface spécifique égale à 30 m²/g, dont 30% en masse est sous une forme boehmite nanométrique,
- 150g d'un liant organique du type méthylcellulose.

Les pourcentages massiques sont de 69,8% pour le SiC et 30,2% pour la poudre d'alumine. La quantité de liant représentant 3,49% ajouté par rapport à la masse sèche de poudres et grains.

On ajoute de l'eau et on malaxe jusqu'à obtenir une pâte homogène et dont la plasticité permet l'extrusion à travers une filière d'une structure en nid d'abeille dont les caractéristiques dimensionnelles sont données dans le tableau 1 :

**Tableau 1**

| Géométrie des canaux et du monolithe | carrée |
|---|---|
| Densité de canaux | 180 cpsi (canaux par inch carré, 1 inch = 2,54 cm,) soit 27,9 canaux/cm² |
| Epaisseur des parois | 350 µm |
| Longueur | 15,2 cm |
| Largeur | 3,6 cm |

On sèche ensuite les monolithes crus obtenus par micro-onde pendant un temps suffisant pour amener la teneur en eau non liée chimiquement à moins de 1 % en masse.
On bouche alternativement les canaux de chaque face du monolithe selon des techniques bien connues, par exemple décrites dans la demande WO 2004/065088.
Le monolithe est ensuite cuit sous air selon une montée en température de 20°C/heure jusqu'à atteindre une température maximale de 1300°C qui est maintenue pendant 5 heures.

On obtient finalement un monolithe dont la porosité et la taille moyenne des pores, mesurés par un porosimètre au mercure, sont respectivement de 37 % et 6 microns.

L'analyse par microscopie électronique à balayage montre une structure sensiblement homogène caractérisée par la présence de grains de SiC entourés d'alumine, établissant des zones de contact entre lesdits grains.

Des analyses par porosimétrie à haute pression de mercure, effectuées avec un porosimètre de type micromeritics 9500, montrent que la distribution des tailles de pore est du type bimodale. Une partie des pores présente une taille centrée sur un diamètre moyen de 7 microns et l'autre partie des pores présente une taille centrée sur un diamètre moyen de 0,15 microns. Une analyse BET du monolithe montre que la surface spécifique du monolithe ainsi obtenu est de 1,7 m²/gramme.

### Exemple 2 :

Dans cet exemple, on a synthétisé un monolithe en partant des mêmes réactifs que ceux décrits dans l'exemple 1. Après des étapes d'extrusion, de séchage et de bouchage identiques à celles décrites dans l'exemple 1, le monolithe est ensuite cuit selon une montée en température de 20°C/heure jusqu'à atteindre une température maximale de 1600°C sous argon qui est maintenue pendant 5 heures.

On obtient finalement un monolithe dont la porosité et la taille moyenne des pores, mesurés par un porosimètre au mercure, sont respectivement de 37 % et 6 µm.

L'analyse par microscopie électronique à balayage montre une structure sensiblement homogène caractérisée par la présence de grains de SiC entourés d'alumine, établissant des zones de contact entre lesdits grains.

Des analyses par porosimétrie à haute pression de mercure, par exemple avec un porosimètre de type micromeritics 9500, montrent que la distribution des tailles de pore est du type bimodale. Une partie des pores présente une taille centrée sur un diamètre moyen de 7 microns et l'autre partie des pores présente une taille centrée sur un diamètre moyen de 0,15 microns. Une analyse BET du monolithe montre que la surface spécifique du monolithe ainsi obtenu est de 1,1 m²/gramme.

### Exemple 3 (comparatif):

Dans cet exemple, on a synthétisé un monolithe de l'art antérieur dont les parois sont constituées exclusivement de carbure de Silicium. Pour cela on a mélangé les mêmes réactifs que dans l'exemple 1 mais sans apport de poudre(s) d'alumine, de façon à obtenir au final, après cuisson à une température supérieure à 2100°C sous Argon, un filtre dont les parois sont constituées uniquement de SiC.

La porosité mesurée sur ce filtre de référence est de 37% et la surface spécifique est de 0,12 m²/g. La distribution des tailles de pore est du type monomodale et la taille des pores est centrée sur 9 microns.

La comparaison des exemples 1 et 2 et de l'exemple comparatif 3 montre qu'il est possible d'obtenir, selon la présente invention, une structure de porosité sensiblement équivalente à celle d'un filtre en carbure de silicium mais de surface spécifique sensiblement améliorée.

Dans la description et les exemples qui précèdent, pour des raisons de simplicité, on a décrit l'invention en relation avec les filtres à particules catalysés permettant l'élimination des polluants gazeux et des suies présents dans les gaz d'échappement en sortie d'une ligne d'échappement d'un moteur diesel.

La présente invention se rapporte cependant également à des supports catalytiques permettant l'élimination des polluants gazeux en sortie des moteurs essence voire diesel. Dans ce type de structure, les canaux du nid d'abeille ne sont pas obstrués à l'une ou l'autre de leur extrémité. Appliquée à ces supports, la mise en oeuvre de la présente invention présente l'avantage d'augmenter la surface spécifique du support et par suite la quantité de phase active présente dans le support, sans pour autant affecter la porosité globale du support.

## Revendications

1. Structure du type en nid d'abeilles, faite d'un matériau céramique poreux, ladite structure étant **caractérisée en ce que** le matériau céramique poreux qui la constitue comprend :
- de 50 à 95 % en masse de carbure de silicium SiC,
- de 5 à 50 % en masse d'au moins une phase céramique oxyde,
ladite structure **se caractérisant en outre par** une porosité supérieure à 10%, par une surface spécifique supérieure à 0,5 m²/g et par une distribution des tailles de pore du type au moins bimodale.

2. Structure du type en nid d'abeilles selon la revendication 1, obtenue à partir d'au moins un précurseur de ladite phase oxyde dont la surface spécifique initiale est supérieure à 2 m²/gramme, de préférence supérieure à 5 m²/g, voire supérieure à 10 m²/g.

3. Structure en nid d'abeilles selon la revendication 2, dans laquelle au moins 5% de la masse du ou des précurseurs est constitué par une poudre se présentant sous une forme nanométrique.

4. Structure en nid d'abeilles selon la revendication 1 à 3 dans laquelle la phase oxyde est choisie dans le groupe constitué par les oxydes d'aluminium, de terres rares, notamment de cérium ou de lanthane, de zirconium, de titane, de silicium et les silico-aluminates.

5. Structure en nid d'abeilles selon l'une des revendications 1 à 3 et comprenant :
- de 50 à 95 % en masse de carbure de silicium SiC,
- de 5 à 50 % en masse d'au moins une phase céramique oxyde simple ou mixte obtenue à partir d'au moins une alumine et/ou d'au moins un aluminate dont la surface spécifique initiale est supérieure à 2 m²/gramme, de préférence supérieure à 5 m²/g,
ladite structure **se caractérisant en outre par** une porosité supérieure à 10%, par une surface spécifique supérieure à 0,5 m²/g, et par une distribution des tailles de pore du type au moins bimodale.

6. Structure selon l'une des revendications précédentes dans laquelle le matériau céramique constitutif présente une porosité globale comprise entre 20 à 65 %.

7. Structure selon l'une des revendications précédentes dans laquelle une partie des pores présente une taille centrée sur un diamètre moyen compris entre 5 et 60 micromètres, de préférence entre 5 et 20. microns et l'autre partie des pores présente une taille centrée sur un diamètre moyen de l'ordre de 1,5 micron ou inférieur à 1,5 micron et de préférence compris entre 1,5 et 0,0015 micron.

8. Structure filtrante selon l'une des revendications précédentes dont la partie centrale comprend un élément filtrant en nid d'abeille ou une pluralité d'éléments filtrants en nid d'abeille reliés entre eux par un ciment de joint, le ou lesdits éléments comprenant un ensemble de conduits ou canaux adjacents d'axes parallèles entre eux séparés par des parois poreuses, lesquels conduits étant obturés par des bouchons à l'une ou l'autre de leurs extrémités pour délimiter des chambres d'entrée s'ouvrant suivant une face d'admission des gaz et des chambres de sortie s'ouvrant suivant une face d'évacuation des gaz, de telle façon que le gaz traverse les parois poreuses.

9. Structure filtrante selon la revendication 8 comprenant un nombre de canaux de 7,75 à 62 par cm², lesdits canaux ayant une section de 0,5 à 9 mm², les parois séparant les canaux ayant une épaisseur d'environ 0,2 à 1,0 mm, de préférence de 0,2 à 0,5 mm.

10. Procédé de fabrication d'une structure selon l'une des revendications 1 à 9 dans lequel ladite structure est obtenue à partir d'un mélange initial de grains de carbure de silicium et d'un oxyde simple ou mixte ou d'un mélange d'oxydes dont la surface spécifique est supérieure à 2 m²/g, de préférence supérieure à 5 m²/g_{.}

11. Procédé de fabrication selon la revendication 10, dans lequel au moins 5% de la masse de l'oxyde simple ou mixte ou du mélange d'oxydes est constitué par une poudre se présentant sous une forme nanométrique.

12. Procédé selon la revendication 10 ou 11, dans lequel ledit oxyde comprend une alumine ou un aluminate ou un mélange d'alumine et/ou d'aluminate.

13. Procédé selon la revendication 10 à 12 dans lequel les grains de carbures de silicium présente un diamètre d₅₀ inférieur à 125 microns, typiquement compris entre 5 à 125 microns.

14. Procédé de fabrication d'une structure selon l'une des revendications 10 à 13 comprenant une étape de malaxage du mélange initial résultant en un produit homogène sous la forme d'une pâte liée, une étape d'extrusion dudit produit à travers une filière appropriée de manière à former des monolithes de forme nid d'abeilles, une étape de séchage des monolithes obtenus, éventuellement une étape d'assemblage et une étape de cuisson.

15. Procédé selon la revendication 14 dans lequel, au cours de la première étape, on malaxe un mélange comprenant au moins du carbure de silicium ayant au moins un type de granulométrie, une ou plusieurs phases oxyde à forte surface spécifique, par exemple une alumine et/ou un aluminate, et éventuellement un agent porogène, puis on ajoute au moins un plastifiant organique et/ou un liant organique et de l'eau.

16. Procédé selon l'une des revendications 10 à 15 **caractérisée en ce que** le carbure de silicium est introduit dans le mélange sous la forme d'une poudre présentant au moins deux types de granulométrie.

17. Procédé selon l'une des revendications 10 à 16 **caractérisé en ce qu'**on utilise un ensemble de grains de carbures de silicium dont le diamètre d₅₀ est comprise entre 5 à 125 microns et on effectue un ajout d'une proportion de 0 à 30 % en masse d'au moins un agent porogène choisi en fonction de la taille des pores recherchée.

18. Procédé selon l'une des revendications 10 à 17 **caractérisé en ce que**, dans l'étape de séchage, les monolithes céramiques crus obtenus sont séchés par micro-onde ou à une température pendant un temps suffisant pour amener la teneur en eau non liée chimiquement à moins de 1 % en masse.

19. Procédé selon l'une des revendications 10 à 18, comprenant une étape de bouchage d'un canal sur deux à chaque extrémité du monolithe.

20. Procédé selon l'une des revendications 10 à 19 **caractérisé en ce que**, dans l'étape de cuisson, la structure monolithe est portée à une température comprise entre environ 750°C et 1400°C, de préférence entre 1200 et 1350°C, sous une atmosphère contenant de l'oxygène ou à une température comprise entre environ 750°C et 1700°C, de préférence entre 1300 et 1600°C, sous une atmosphère neutre.

21. Filtre ou support catalytique obtenu à partir d'une structure selon l'une des revendications 1 à 9 par dépôt, de préférence par imprégnation, d'au moins une phase catalytique active supportée ou de préférence non supportée, comprenant typiquement au moins un métal précieux tel que Pt et/ou Rh et/ou Pd et éventuellement un oxyde tel que CeO₂ ZrO₂, CeO₂-ZrO₂

22. Utilisation d'une structure selon la revendication 21 comme support catalytique dans une ligne d'échappement d'un moteur diesel ou essence ou comme filtre à particules dans une ligne d'échappement d'un moteur diesel.

## Claims

1. A honeycomb-type structure, made from a porous ceramic material, said structure being **characterized in that** the porous ceramic material which forms it comprises:
- from 50 to 95% by weight of silicon carbide SiC;
- from 5 to 50% by weight of at least one ceramic oxide phase, said structure additionally being **characterized**
**by** a porosity greater than 10%, by a specific surface area greater than 0.5 m²/g and by a pore size distribution of at least bimodal type.

2. The honeycomb-type structure as claimed in claim 1, obtained from at least one precursor of said oxide phase of which the initial specific surface area is greater than 2 m²/g, preferably greater than 5 m²/g, or even greater than 10 m²/g.

3. The honeycomb structure as claimed in claim 2, in which at least 5% of the weight of the precursor or precursors is composed of a powder that is in a nanoscale form.

4. The honeycomb structure as claimed in claims 1 to 3, in which the oxide phase is chosen from the group composed of aluminum, rare-earth, especially cerium or lanthanum, zirconium, titanium and silicon oxides and silicoaluminates.

5. The honeycomb structure as claimed in one of claims 1 to 3 and comprising:
- from 50 to 95% by weight of silicon carbide SiC;
- from 5 to 50% by weight of at least one single or mixed ceramic oxide phase obtained from at least one alumina and/or at least one aluminate of which the initial specific surface area is greater than 2 m²/g, preferably greater than 5 m²/g,
said structure additionally being **characterized by** a porosity greater than 10%, by a specific surface area greater than 0.5 m²/g and by a pore size distribution of at least bimodal type.

6. The structure as claimed in one of the preceding claims, in which the consistuent ceramic material has an overall porosity between 20 and 65%.

7. The structure as claimed in one of the preceding claims, in which one part of the pores has a size centered about an average diameter between 5 and 60 microns, preferably between 5 and 20 microns and the other part of the pores has a size centered about an average diameter of around 1.5 microns or less than 1.5 microns and preferably between 1.5 and 0.0015 microns.

8. The filtering structure as claimed in one of the preceding claims, of which the central part comprises a honeycomb filtering element or a plurality of honeycomb filtering elements connected together by a joint cement, said element or elements comprising a set of adjacent ducts or channels with axes parallel with one another separated by porous walls, which ducts are stopped by plugs at one or other of their ends to delimit inlet chambers opening on a gas intake face and outlet chambers opening on a gas discharge face, in such a way that the gas passes through the porous walls.

9. The filtering structure as claimed in claim 8, comprising a number of channels from 7.75 to 62 per cm², said channels having a cross section of 0.5 to 9 mm², the walls separating the channels having a thickness of around 0.2 to 1.0 mm, preferably of 0.2 to 0.5 mm.

10. A process for manufacturing a structure as claimed in one of claims 1 to 9, in which said structure is obtained from an initial mixture of silicon carbide grains and a single or mixed oxide or from a mixture of oxides having a specific surface area that is greater than 2 m²/g, preferably greater than 5 m² /g.

11. The manufacturing process as claimed in claim 10, in which at least 5% of the weight of the single or mixed oxide or of the mixture of oxides is composed of a powder that is in a nanoscale form.

12. The process as claimed in claim 10 or 11, in which said oxide comprises an alumina or an aluminate or an alumina and/or aluminate mixture.

13. The process as claimed in claims 10 to 12, in which the silicon carbide grains have a diameter d₅₀ of less than 125 microns, typically between 5 and 125 microns.

14. The process for manufacturing a structure as claimed in one of claims 10 to 13, comprising a step of kneading the initial mixture resulting in a homogeneous product in the form of a bound paste, a step of extruding said product through a suitable die so as to form monoliths of honeycomb shape, a step of drying the monoliths obtained, optionally an assembly step and a curing step.

15. The process as claimed in claim 14, in which, during the first step, a mixture comprising at least silicon carbide having at least one type of particle size distribution, one or more oxide phases having a high specific surface area, for example an alumina and/or an aluminate, and optionally a pore-forming agent, are kneaded, then at least one organic plasticizer and/or an organic binder and water are added.

16. The process as claimed in one of claims 10 to 15, **characterized in that** the silicon carbide is introduced into the mixture in the form of a powder having at least two types of particle size distribution.

17. The process as claimed in one of claims 10 to 16, **characterized in that** a set of silicon carbide grains is used of which the diameter d₅₀ is between 5 and 125 microns and an amount of 0 to 30% by weight of at least one pore-forming agent, chosen as a function of the desired pore size, is added.

18. The process as claimed in one of claims 10 to 17, **characterized in that**, in the drying step, the green ceramic monoliths obtained are dried by microwaves or at a temperature for a sufficient time to bring the content of chemically unbound water to less than 1% by weight.

19. The process as claimed in one of claims 10 to 18, comprising a step of plugging every other channel at each end of the monolith.

20. The process as claimed in one of claims 10 to 19, **characterized in that**, in the curing step, the monolith structure is brought to a temperature between around 750°C and 1400°C, preferably between 1200 and 1350°C, under an atmosphere containing oxygen or to a temperature between around 750°C and 1700°C, preferably between 1300 and 1600°C, under a neutral atmosphere.

21. A catalytic support or filter obtained from a structure as claimed in one of claims 1 to 9, by deposition, preferably by impregnation, of at least one supported or preferably unsupported active catalytic phase, typically comprising at least one precious metal such as Pt and/or Rh and/or Pd and optionally an oxide such as CeO₂, ZrO₂, CeO₂-ZrO₂.

22. The use of a structure as claimed in claim 21, as a catalytic support in an exhaust line of a diesel or petrol engine or as a particle filter in an exhaust line of a diesel engine.

## Patentansprüche

1. Wabenstruktur, die aus einem porösen keramischen Material hergestellt ist, **dadurch gekennzeichnet, dass** das sie bildende poröse keramische Material:
- 50 bis 95 Masse-% Siliciumcarbid, SiC, und
- 5 bis 50 Masse-% mindestens einer oxidkeramischen Phase
umfasst, wobei diese Struktur außerdem **gekennzeichnet ist durch** eine Porosität von mehr als 10 %, eine spezifische Oberfläche von mehr als 0,5 m²/g und eine wenigstens zweigipflige Porengrößenverteilung.

2. Wabenstruktur nach Anspruch 1, die aus mindestens einem Vorläufer der Oxidphase erhalten ist, dessen anfängliche spezifische Oberfläche mehr als 2 m²/Gramm, vorzugsweise mehr als 5 m²/g, und sogar mehr als 10 m²/g beträgt.

3. Wabenstruktur nach Anspruch 2, bei welcher mindestens 5 % der Masse des/der Vorläufer/s von einem Pulver gebildet sind, das in nanometrischer Form vorliegt.

4. Wabenstruktur nach Anspruch 1 bis 3, bei welcher die Oxidphase aus der Gruppe ausgewählt ist, die aus den Oxiden des Aluminiums, der Seltenerdmetalle, insbesondere des Cers oder Lanthans, des Zirconiums, Titans und Siliciums, und den Silicoaluminaten besteht.

5. Wabenstruktur nach einem der Ansprüche 1 bis 3, die:
- 50 bis 95 Masse-% Siliciumcarbid, SiC, und
- 5 bis 50 Masse-% wenigstens einer keramischen Phase aus einem einfachen oder Mischoxid, die aus mindestens einem Aluminiumoxid und/oder mindestens einem Aluminat erhalten ist, dessen anfängliche spezifische Oberfläche mehr als 2 m²/Gramm und vorzugsweise mehr als 5 m²/g beträgt,
umfasst und außerdem **gekennzeichnet ist durch** eine Porosität von mehr als 10 %, eine spezifische Oberfläche von mehr als 0,5 m²/g und eine mindestens zweigipflige Porengrößenverteilung.

6. Struktur nach einem der vorhergehenden Ansprüche, bei welcher das sie bildende keramische Material eine Gesamtporosität von 20 bis 65 % aufweist.

7. Struktur nach einem der vorhergehenden Ansprüche, bei welcher ein Teil der Poren eine Größe, die auf einen mittleren Durchmesser von 5 bis 60 Mikrometern und vorzugsweise zwischen 5 und 20 Mikrometern zentriert ist, und der andere Teil der Poren eine Größe, die auf einen mittleren Durchmesser von etwa 1,5 Mikrometer oder kleiner als 1,5 Mikrometer und vorzugsweise 1,5 bis 0,0015 Mikrometer zentriert ist, aufweist.

8. Filterstruktur nach einem der vorhergehenden Ansprüche, deren zentraler Teil ein wabenförmiges Filterelement oder eine Vielzahl wabenförmiger Filterelemente, die durch einen Dichtungszement miteinander verbunden sind, umfasst, wobei das/die Element/e eine Einheit aus einander benachbarten Leitungen oder Kanälen mit parallelen Achsen, die durch poröse Wände voneinander getrennt sind, umfasst/umfassen und diese Leitungen an einem ihrer Enden mit Stopfen verschlossen sind, um Eintrittskammern, die sich, zu einer Zutrittsseite des Gases hin öffnen, und Austrittskammern, die sich zu einer Austrittsseite des Gases hin derart öffnen, dass das Gas durch die porösen Wände hindurchströmt, zu begrenzen.

9. Filterstruktur nach Anspruch 8, welche 7,75 bis 62 Kanäle pro cm², die einen Querschnitt von 0,5 bis 9 mm² besitzen, umfasst, wobei die Wände, welche die Kanäle trennen, eine Dicke von etwa 0,2 bis 1,0 mm und vorzugsweise 0,2 bis 0,5 mm haben.

10. Verfahren zur Herstellung einer Struktur nach einem der Ansprüche 1 bis 9, in welchem die Struktur aus einem Ausgangsgemisch aus Körnern aus Siliciumcarbid und einem einfachen bzw. Mischoxid oder einem Oxidgemisch, deren spezifische Oberfläche mehr als 2 m²/g und vorzugsweise mehr als 5 m²/g beträgt, erhalten wird.

11. Herstellungsverfahren nach Anspruch 10, in welchem mindestens 5 % der Masse des einfachen bzw. Mischoxids oder des Oxidgemischs von einem Pulver gebildet werden, das in nanometrischer Form vorliegt.

12. Verfahren nach Anspruch 10 oder 11, in welchem das Oxid ein Aluminiumoxid bzw. Aluminat oder ein Gemisch aus Aluminiumoxid und/oder Aluminat umfasst.

13. Verfahren nach Anspruch 10 bis 12, in welchem der Durchmesser d₅₀ der Siliciumcarbidkörner weniger als 125 Mikrometer und typischerweise zwischen 5 und 125 Mikrometern beträgt.

14. Verfahren zur Herstellung einer Struktur nach einem der Ansprüche 10 bis 13, das eine Stufe des Knetens des Ausgangsgemischs, die in einem homogenen Produkt in Form einer gebundenen Masse resultiert, eine Stufe des Extrudierens des Produkts durch eine geeignete Düse, sodass wabenförmige Monolithe gebildet werden, eine Stufe des Trocknens der erhaltenen Monolithe, gegebenenfalls eine Stufe des Zusammenbaus und eine Brennstufe umfasst.

15. Verfahren nach Anspruch 14, in welchem während der ersten Stufe ein Gemisch, das wenigstens Siliciumcarbid mit mindestens einer Korngrößenverteilung, eine oder mehrere Phasen aus einem Oxid mit großer spezifischer Oberfläche, beispielsweise einem Aluminiumoxid und/oder einem Aluminat, und gegebenenfalls ein porogenes Mittel umfasst, geknetet wird und anschließend mindestens ein organisches Plastifizierungsmittel und/oder ein organisches Bindemittel und Wasser zugegeben werden.

16. Verfahren nach einem der Ansprüche 10 bis 15, **dadurch gekennzeichnet, dass** das Siliciumcarbid in das Gemisch in Form eines Pulvers, das mindestens zwei Arten der Korngrößenverteilung aufweist, eingeführt wird.

17. Verfahren nach einem der Ansprüche 10 bis 16, **dadurch gekennzeichnet, dass** eine Einheit aus Siliciumcarbidkörnern verwendet wird, deren Durchmesser d₅₀ 5 bis 125 Mikrometer beträgt, und 0 bis 30 Masse-% mindestens eines porogenen Mittels, das in Abhängigkeit von der gewünschten Porengröße ausgewählt ist, zugegeben werden.

18. Verfahren nach einem der Ansprüche 10 bis 17, **dadurch gekennzeichnet, dass** in der Trocknungsstufe die erhaltenen rohen keramischen Monolithe durch Mikrowellen oder in der Wärme einen Zeitraum lang getrocknet werden, der ausreicht, um den Gehalt an chemisch nicht gebundenem Wasser auf weniger als 1 Masse-% zu bringen.

19. Verfahren nach einem der Ansprüche 10 bis 18, **dadurch gekennzeichnet, dass** es eine Stufe des Verschließens eines Kanals von zwei Kanälen an jedem Ende des Monolithen umfasst.

20. Verfahren nach einem der Ansprüche 10 bis 19, **dadurch gekennzeichnet, dass** die Monolithstruktur in der Brennstufe auf eine Temperatur von etwa 750 bis 1400 °C und vorzugsweise zwischen 1200 und 1350 °C unter einer sauerstoffhaltigen Atmosphäre oder auf eine Temperatur von etwa 750 bis 1700 °C und vorzugsweise zwischen 1300 und 1600 °C unter einer neutralen Atmosphäre gebracht wird.

21. Filter oder katalytischer Träger, der aus einer Struktur nach einem der Ansprüche 1 bis 9 durch Aufbringen, vorzugsweise Imprägnieren, wenigstens einer aktiven katalytischen Phase, die getragen oder vorzugsweise nicht getragen ist und typischerweise mindestens ein Edelmetall wie Pt und/oder Rh und/oder Pd und gegebenenfalls ein Oxid wie CeO₂, ZrO₂ und CeO₂-ZrO₂ umfasst, erhalten worden ist.

22. Verwendung einer Struktur nach Anspruch 21 als katalytischer Träger in der Abgasanlage eines Diesel- bzw. Benzinmotors oder als Partikelfilter in der Abgasanlage eines Dieselmotors.
